# EUROPEAN PATENT APPLICATION

(11) **EP 1 181 870 A1**
(43) Date of publication of application: **27.02.2002**
(21) Application number: 00870181.5
(22) Date of filing: 22.08.2000
(51) Int. Cl.: A23L 1/29, A23L 1/30, A23L 1/302, A23C 9/152

(54) **Manufactured lipid emulsion having an improved balanced dietary source of vitamin F**

(71) Applicant: Belovo Eggs & Egg Products, 6600 Bastogne (BE)
(72) Inventor: Erpicum, Thomas, 4000 Seraing (BE); Thiry, Jean-François, 6600 Bastogne (BE); Dejardin, Philippe, 4870 Trooz (BE); Ramirez, Philippe, 4432 Ans (BE); De Meester, Fabien, 6900 Marche-en-Famenne (DE)
(74) Representative: Van Malderen, Michel

(57) **Abstract**

The present invention is related to a manufactured lipid emulsion having a formula suitable for feeding infants, comprising pre-emulsified egg yolk phospholipid micelles (diameter < 0.22 µM) with about 10 to 20% by weight of phospholipid (including 1 to 28 by weight of choline), about 1,5 to 2,5% by weight cholesterol, about 35 to 45% by weight of essential fatty acids and about 35 to 45% by weight of non-essential fatty acids, the total of the micelles being 100% by weight.

## Description

### Field of the invention

The present invention is related to a new manufactured lipid nano-emulsion, having an improved balanced dietary source of vitamin F, especially a manufactured lipid emulsion and food composition having a formula suitable for supplementing infants and/or ageing adults.

### Background of the invention

Breast-feeding is often declared as a good feeding practice in mammalians including humans. It is believed to provide the kind of essential continuity in the food supply that helps overcome the sudden stress experienced at birth and that supports the discontinuous development of the newborn during the first weeks of extra-uterine life. The nine months of intra-uterine development of the human foetus share some analogy with the period of convalescence of hospital patients: confined sterile environment and glucose-based parenteral feeding. In principle, all essential dietary ingredients (vitamins & minerals) are transferred from the mother's blood to differentiating and growing foetal tissues. Vitamin F (essential fatty acids) is no exception to this rule. Among these vitamins are those of plant origin (EFAs) and those of animal origin (LCPs) that the mother synthesises prior to transfer.

At birth, mother substitutes some glucose for fats in milk in addition to adding some protecting nutritional agents (immunoglobulins, decoy carbohydrates, etc) for the protection of the gastro intestinal tract of the baby that is suddenly exposed to environmental invasions. Except for this change in the source of energy that occurs at birth and which is important for the intestinal absorption of fat soluble vitamins, the newborn finds in its mother milk the same dietary panel of essential nutrients that he relied on during the nine month of gestation. Among the animal-derived nutrients present in human milk are CHL and LCPs that fulfil baby's needs until his own lipid metabolic pathways are being switched on to a level that could eventually cope with the requirements of the still-developing tissues and later tissue homeostasis.

Experiments carried out with mammalians as well as epidemiological human studies have clearly established a relationship between a shortage in animal-derived nutrients at birth and behavioural deficiencies and/or abnormalities (growth, motricity, emotivity, learning performance, IQ, visual acuity, etc) at later stages of development. Re-balancing the diet when the first signs of impairment are observed has been shown to normalise the chemical composition of the tissues, however damage to behaviour, visual and nervous system function are not easily reversed.

If breast-feeding is abandoned as a feeding practice for more appropriate socially accepted methods, infant formula manufacturers should critically evaluate the content of vitamin F in their product. The relative constancy of the breast milk composition has made some recommendations feasible and such have been endorsed by scientific communities (ESPPGAN, 1991; BNF, 1993) and official expert panels (FAO/WHO, 1994). Another expert panel (LSRO, 1998) did recommend that the question of requiring the addition of specific LCPs to infant formulas be reassessed in five years.

The FAO/WHO report on 'Fats and Oils in Human Nutrition (1994)' specified recommended amounts of animal-derived fatty acids in preterm and term infant formulas (table 1).

**Table 1:**

| **FAO/WHO recommendation for LCPs in preterm and term infant formulas** | | | | |
|---|---|---|---|---|
| | mg/kg BW | | mg/100 ml formula | |
| LCPs | Pre-Term | Term | Pre-Term | Term |
| AA | 60 | 40 | 40 | 27 |
| DHA | 40 | 20 | 27 | 13.5 |
| BW: bodyweight, Pre-term & term infants: 150 ml formula/kg BW/day. | | | | |

When compared to the average composition of mature human milk (table 2), the WHO/FAO recommendation for term infant formula lie well in line with the amount of LCPs found in breast milk, but the latter is more diverse in those fatty acids.

**Table 2:**

| **Composition of mature human milk** | | | | | | | | |
|---|---|---|---|---|---|---|---|---|
| | LA | γ-LA DHLA | AA | α-LnA | EPA | DPA DHA | CHN | CHL |
| Human Milk (mg/100ml) | 350 | 13.65 | 11.70 | 26.32 | 1.30 | 12.65 | 14.5 | 18.0 |
| LA: linoleic acid, γ-LA: gamma-linolenic acid, DHLA: dihomo-γ-linolenic acid, AA: arachidonic acid, α-LnA: alpha-linolenic acid, EPA: eicosapentaenoic acid, DPA: docosapentaenoic acid, DHA: docosahexaenoic acid, CHN: choline, CHL.: cholesterol. | | | | | | | | |

Of major interest is the presence of Δ6-desaturase products (γ-LA and DHLA) in human milk which may well be crucial to the early establishment of a favourable thromboxane / prostacyclin ratio in the newborn with beneficial effects on blood pressure, clotting ability, kidney and immune system functions.

Futhermore, the stess originating from growth and/or intense activity is highly demanding in terms of nutrient requirements. Epidemiological research has demonstrated the health advantage of the Mediterranean diet, including olive oil, wine, and an abundance of fish, vegetables and fruits, all found to be beneficial in the prevention of degenerative diseases. Today, dieticians recommend that a well-balanced diet provides 30 to 35% energy as fat with a large proportion of the dietary fat consisting of monounsaturated fatty acids and an even distribution of saturated and polyunsaturated fatty acids (S:M:P = 1:6:1). A ratio between ω6 and ω3 isomers not exceeding 5 to 1 (ω6:ω3 < 5:1) is recommended and achieved through an optimal daily intake of 350-400 mg ω3 long chain polyunsaturated fatty acids (ω3 LCPs).

Cognitive decline in the healthy can begin as early as the fifth decade of life. It is estimated that more than half citizens over 65 in the western world are likely experiencing impaired capacities. Progressive loss of mental functions can have a telling effect on personal productivity, can damage self-esteem, and brings considerable distress to many ageing adults.

### Aims of the invention

The present invention aims to provide a manufactured lipid emulsion and food composition comprising it, having an improved balanced dietary source of vitamin F, in order to improve the general health of humans, especially of infants.

A further aim of the present invention is to provide such a manufactured lipid emulsion having a formula suitable for feeding infants and which may mimic breast feeding.

A further aim of the invention is to provide such compositions having a balanced dietary source of vitamin F suitable for feeding infants, which is easily obtained from naturally occurring sources at low costs.

### Summary of the invention

The present invention is related to a manufactured lipid nano-emulsion having an improved balanced dietary source of vitamin F (especially having a formula suitable for feeding (supplementing) infants, comprising (on a dry basis) between about 10 and about 20% by weight of phospholipids, including about 1 to about 2% by weight of choline, about 1,5 to about 2,5% by weight of cholesterol, about 35 to about 45% by weight of essential fatty acids and between 35 and 45% by weight of non-essential fatty acids, the total of the emulsion being 100% by weight, which are preferably pre-emulsified egg yolk phospholipid micelles having an advantageous diameter lower than 0,22 µm, said nano-emulsion being obtained from naturally occurring sources which mimic breast milk micelles, but do not correspond to said breast milk product. The emulsion according to the invention does not comprise specific elements present in human breast milk such as antibodies obtained from the mother.

Said manufactured product is an encapsulation of essential oils in egg phospholipid micelles, which provides a means to closely mimic the characteristics of emulsified state of human milk and is suitable to adjust fatty acid composition of instant formulas to existing officially recognised standards.

The manufactured lipid nano-emulsion (particle size < 200 nm) having improved balanced dietary sources of vitamin F are characterised by their extreme level of dispersion which, on the one hand, allows to eliminate bacterial contamination prior to sterilisation and hence to avoid heat-derived pyrogen contamination and, on the other hand, is extremely bio-available through its easy digestion in the gastro-intestinal tract of human of all ages. When distributed in disposable one dose-vials, the manufactured lipid emulsion is also extremely stable against oxidation and contamination since it is essentially kept in sterile sealed containers under nitrogen and it is open at the time of consumption.

This emulsion (Baby Vitamin F™) ensures the new-born of a plentiful supply of prostaglandins with beneficial effects on blood pressure, clotting ability, kidney function and immune system function.

Among other things, it gives the baby a healthy cardiovascular start into its new world.

Preferably, the manufactured lipid emulsion according to the invention is a mixture of conditionally essential fatty acids comprising in one gram (on a dry basis) a similar amount of phospholipids (about 145 mg including 14,5 mg of choline, about 18 mg of cholesterol, about 415 mg of essential fatty acids as those found in 100 ml of breast milk, together with 12,5% (392 mg) of non-essential fatty acids.

Such manufactured lipid emulsion could be made available in liquid form (i.e., in small individual vials to be incorporated into the infant bottles prior to consumption) or in powder forms (i.e., spray dried on maltodextrin based carriers).

Such manufactured lipid emulsion could be mixed with a safe source of other non-essential fats (for instance butter oil or interesterified vegetable oils), which transforms it into an ideal nutritive lipid source suitable for infants. The latter can eventually be spray-dried on a carrier (preferably an element selected from the group consisting of electrodialysed whey and non-fat milk) and eventually containing other additives (vitamines, minerals, ribonucleotides, prostaglandines, immunoglobulines, etc) in order to obtain an ideally balanced infant formula or food composition.

Preferably, the essential fatty acids are long chain polyunsaturated fatty acids which are linolenic acid (LA), gamma-linolenic acid (γ-LA), dihomo-γ-linolenic acid (DHLA), arachidonic acid (AA), alpha-linolenic acid (α-LnA), eicosapentaenoic acid (EPA), docosatentaenoic acid (DPA) and docosahexaenoic acid (DHA).

Preferably, the arachidonic acid (AA) is obtained from egg yolk phospholipids, the docosahexaenoic acid (DHA) and the eicosapentaenoic acid (EPA) are obtained from fish oils and the gamma-linolenic acid is obtained from borage oils.

Other characteristics of the specific infant formula according to the invention are described in details hereafter.

### Short description of the drawings

Fig. 1 represents the lipid emulsion according to the invention (Baby Vitamin F™ ).

Fig. 2 represents tissue response to external stimuli in relation with cell membrane lipids composition.

Fig. 3 represents the structure and composition of egg yolk phospholipids (EYPLs).

Fig. 4 represents the structure of animal phospholipids and its implication for their resorption.

Fig. 5 represents dietary-induces changes in egg phospholipid long chain polyinsaturated fatty acids (LCP) composition and their relationship with human requirements at different stages of lifecycle.

Fig. 6 represents the bioconversion of Egg Yolk phospholipid (EYPL) to Egg Yolk phosphotidylserine (EYPS).

### Detailed description of the invention

### Infant formula of the product according to the invention (Baby Vitamin F ™)

Baby Vitamin F® exclusively contains naturally occurring sources of essential - and conditionally essential fatty acids, and does not rely on single cell oils (SCO) (table 3).

**Table 3:**

| **Source of fatty acids in Baby Vitamin F ®** | | | |
|---|---|---|---|
| Fatty acid | Chemical name | Abbreviation | Source |
| Linoleic | C18:2ω6 | LA | Sunflower, soja |
| α-linolenic | C18:3ω3 | α-LnA | |
| γ-linolenic | C18:3ω6 | γ-LA | bovage |
| Dihomo-γ-linolenic | C20:3ω6 | DHLA | |
| Arachidonic | C20:4ω6 | AA | egg |
| Eicosapentaenoic | C20:5ω3 | EPA | fish |
| Docosapentaenoic | C22:5ω3 | DPA | |
| Docosahexaenoic | C22:6ω3 | DHA | |

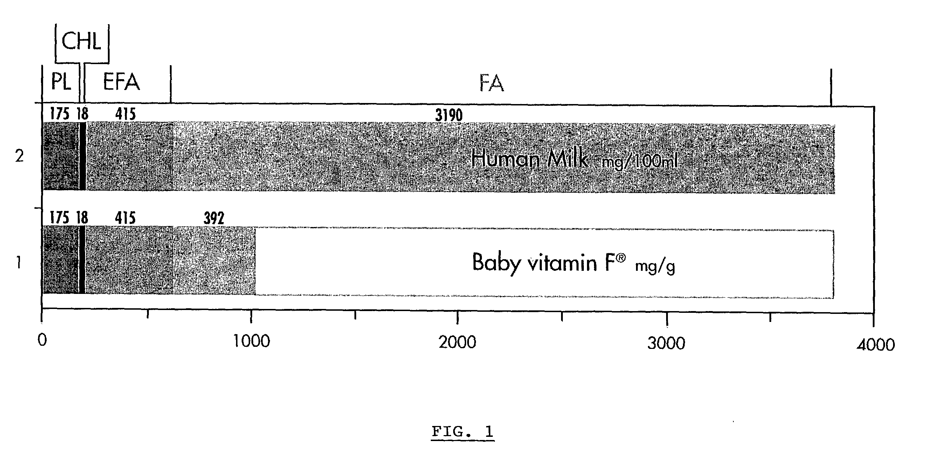

The encapsulation of essential oils in 4%-egg phospholipid micelles (145 mg phospholipids for 3.8 g total fat in 100 ml formula) provides a means to closely mimic the characteristic emulsified state of human milk and/or to adjust fatty acid composition of infant formulas to existing officially recognised standards. The product according to the invention (Baby Vitamin F™) is advantageously an all-in-one emulsion containing egg yolk phospholipid-derived AA in association with a mixture of highly emulsified LCPs (Fig. 1).

The product according to the invention is a mixture of the 'conditionally-essential' fatty acids found in mature human milk (415 mg per 100 ml). One gram of the product according to the invention provides a similar amount of phospholipids, cholesterol, essential fatty acids as that found in breast milk, together with non-essential fatty acids. When present in enriched infant formula, they behave as a similarly dispersed source of long chain polyunsaturated fatty acids associated with the right level of cholesterol and choline.

Advantageously, it provides similar amount of choline (CHN: 14.5 mg/100 ml) and cholesterol (CHL: 18.0 mg/100 ml) as those naturally occurring in human milk, provides increased resistance to oxidation and improves digestibility and uptake. The unique natural arrangement of high-value dietary ingredients in egg phospholipid finely dispersed micelles makes them homeostatic with the gastro intestinal tract of the baby and quantitatively available through digestion. Furthermore, EYPLs do not present specific antigenic sites, while free or associated with other nutrients such as amino acids and oils.

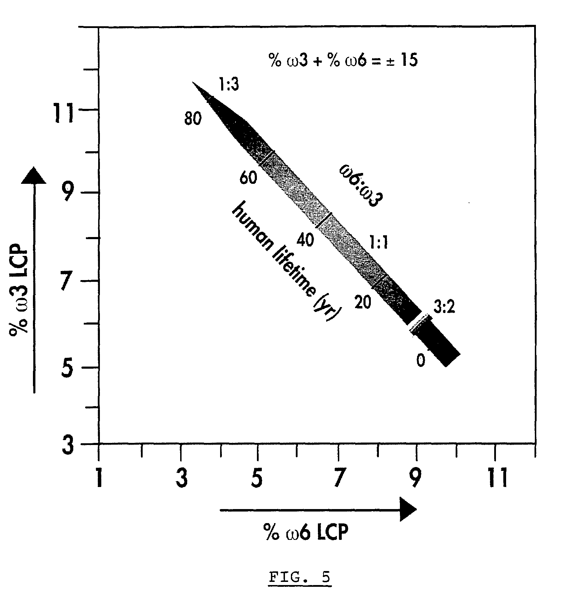

Egg yolk phospolipids bring an interesting response to the changing requirements of humans for vitamin F as they age. Indeed, the laying hen transfers to the PL fraction of the yolk a mixture of fatty acids that reflects the type of diet it is served. The amount of LCP's in egg yolk Please is maintained at a constant of +/-15% whilst the ω6:ω3 ratio of these animal-derived LCPs varies according to the same ratio of the vegetable EFAs present in the layer meal. In practice, it is thus feasible to adjust the PL composition in egg to changing needs for LCPs in humans (fig.5). At early stage of development, infants have specific needs for pre-formed growth factors. LCPs are one of them that also naturally occur in breast milk in an average ω6:ω3 ratio nearing 3:2 - as they occur in Baby Vitamin F® .

AA is crucial to the growth of cell organs and tissues whilst DHA is particularly important to the proper development of the brain and the retina. AA, γ-LA and DHLA are mostly involved in tissue responses to external stimuli. Reaching full development at adult age, the requirements for tissue and organ homeostasis rather than growth take the lead. A 1:1 ratio has been recommended for it seems to be similar to the ω6:ω3 ratio human has evolved on for more than 4 million years. In principle, the human body at maturity can respond to organ and tissue demands for LCPs, providing the EFAs, (LA and LnA) are present in the diet in a less than 5:1 ratio. The Columbus Egg® (Patent Application Nr. 00870109.6-2114) complies with this historically proven requirement. In addition, it is known that the modern-style diet is far from being balanced, giving a higher degree of preference to the ω6 LA. Common physiological disorders (stress, emotion, smoking habits, alcohol consumption, diabet§es milletus, high blood cholesterol levels, ageing, etc) also reduce the capacity of the body to synthesise ω3LCPs for its own need, which has made dietary supplementation recommended.

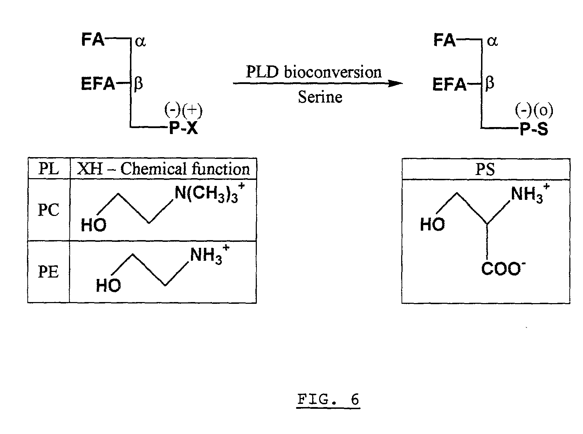

With age, the need for ω3LCPs becomes associated with an increasing need for its preformed carrier to the brain, phosphatidylserine. Just as with LCP, the endogenous synthesis of PS involves complex biological pathways and claims substantial energy. This specific PL is present at low concentration in all cells throughout the body where it combines with membrane proteins and turn them into an active form for cell communication and functioning. The extremely active neurological function of the brain makes this organ particularly rich in PS and sensitive to all sort of biological shortage. As EYPL can be partially or quantitatively converted to phosphatidylserine or PHOTOSENSITIVE through bio-conversion catalysed by naturally-occurring, non gmo-phospholipase D (PLD) in the presence of serine (fig.6).

A specific formulation of the lipid emulsion according to the invention with suitable amount of specific LCPs pattern for human at advancing stage of life is an answer to both the present ω3-poor day-to-day diet and the increasing needs for pre-formed ω3 LCPs and PS with age. It provides the ω3 LCPs and the EYPL-derived PS (EYPS) in a similar chemistry as they happen to be in the brain and in a similar homeostatic environment as they occur in Baby Vitamin F® and human milk. It perfectly fits into the modern specific dietary recommendations with greater emphasis on homeostatic factors over growth promoting factors.

Senior Vitamin F® is an all-in-one emulsion whose composition is similar to that of Baby Vitamin F® , but where the major phospholipids (PC and PE) from egg yolk have been enzymatically converted to PS. The phospholipid micelles in Senior Vitamin F® provide up to 300 mg PS together with 220 mg DHA and 220 mg EPA (table 3).

**Table 3:**

| **Composition of Brain Vitamin F ®** | | | |
|---|---|---|---|
| | EPA | DHA | PS |
| A.I.* (mg) | 220 | 220 | (300) |
| Brain Vitamin F® (mg/g) | 220 | 220 | 300 |
| Lipid source | Fish | Fish | Egg |

| | | | |
|---|---|---|---|
| * Daily Adequate Intake (A.I.) for animal derived omega-3 fatty acids (EPA + DHA = 440 mg) together with 300 mg phosphatidylserine | | | |

Egg yolk phospholipids (EYPLs) have recently been registered as a Novel Food in the European Community (EC 258/97). They differ from phospholipids of plant origin in that they are extremely rich in phosphatidylcholine (PC) and bear substantial amount of naturally-occurring arachidonic acid (AA).

Phospholipids occur naturally in all natural tissues of vegetable and animal origin. Animal cell membranes differ from their plant ancestors in that they contain long chain polyunsaturated fatty acids (LCPs) and cholesterol (CHL). LCLs appear to be specifically attached to membrane phospholipids. There seems to have been an evolutionary pressure towards the simultaneous appearance of LCPs and CHL in cell membranes of both marine and terrestrial animals in a close to balance ratio. This universal rule contrasts with the rather peculiar distribution of ω3-LCPs in long chain triglycerides (LCTs) found in some cold sea plankton, fish and mammals, and which appears to be an evolutionary adaptation of organisms to a rather hostile environment.

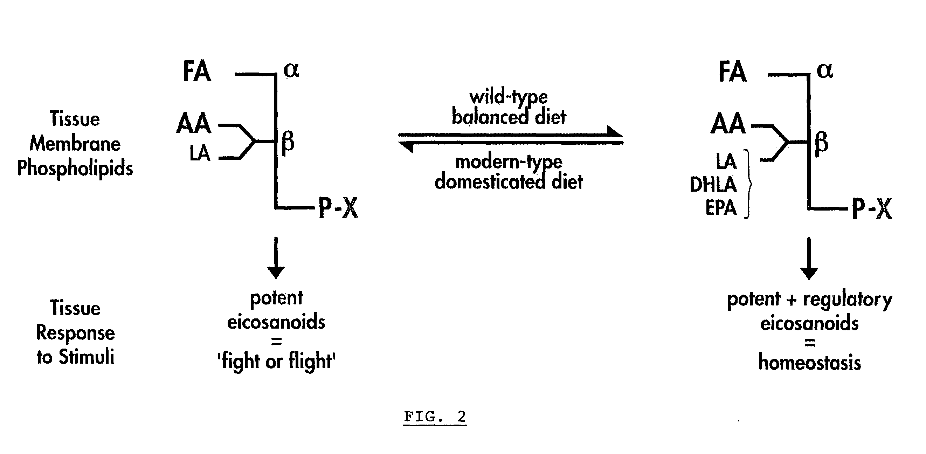

Membrane fluidity and deformability are important parameters to the enzymic activities of the cell surface and the right balance of LCPs and CHL is probably the single most important factor influencing the rheological properties of the cell membrane. LCPs in membranes are also involved in cell signalling through their conversion to eicosanoids, mainly from arachidonic acid (AA, C20:4ω6), dihomo-γ-linolenic acid (DHLA, C20:3ω6) and eicosapentaenoïc acid (EPA, C20:5ω3). In *normal* people, the concentration of arachidonic acid in tissue lipids remains almost constant whatever the type of diet they live on. There seems to be some definite requirements for tissue AA-derived eicosanoïds production. On the other hand, the presence of DHLA and EPA in cell membrane seems to be related to their dietary level which, in turn, is seen as a potential good indicator for cellular health, tissue homeostasis and global feel good factor. Indeed, DHLA and EPA-derived eicosanoïds have been characterised as regulatory metabolites that are complementary to those more potent, though essential, derived from AA (see Fig. 2).

### EYPLs or egg yolk phospholipids - Structure, composition, physicochemical and nutritional properties

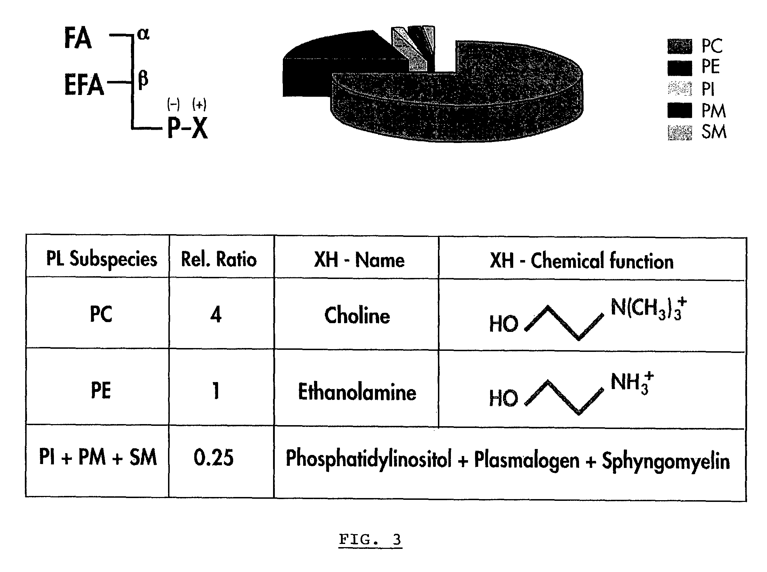

Egg phospholipids (EYPLs) provide a substantial amount of choline in the form of choline ester of phosphatidic acid that bears conditionally-essential animal-derived fatty acids (LCP), mainly AA and DHA, at the β position of the phospho-glycerol moiety. They are essentially composed of phosphatidylcholine (PC, 76%) and phosphatidylethanolamine (PE, 19%). Choline accounts for about 10% of EYPLs and LCPs for about 15% of total fatty acids content in weight. Higher amounts of LA and/or AA in the layer's diet result in more ω6 LCPs (mainly AA) substituting for ω3 LCPs (mainly DHA) at the β position of the glycerol carrier (Fig. 3).

Egg yolk phospholipids are mainly phosphatidylcholine and phosphatidylethanolamine in a 4:1 ratio. Small amount (1.5 - 2.0%) of phosphatidylinositol, plamsmalogen and sphyngomyelin are also found. Essential fatty acids and long chain polyinsaturated fatty acids are almost exlusively located at the β position of the phosphoglycerol carrier.

PC and PE are zwitterionic and amphiphilic at all ranges of physiological pH. Their net charge is around 0 and their HLB value around 7 making their interaction with other nutrients (water- and lipid-soluble) led by their capacity to form dispersions and to help their digestion, absorption and metabolism. Indeed, dietary PLs mix with pancreatic PLs to help disperse and metabolise dietary fats and to maintain the mucosal surface in a hydrophobic, non-wettable environment, thus protecting it from the corrosive action of stomach acid and/or exogenous damaging substances.

LCPs in EYPLs have been reported to be quantitatively (>95%) bio-available in *in-vivo* studies. From the structure-function point of view, this property can be explained from the fact that LCPs specifically occur at position sn-2 or β of the glycerol moiety and thus become a substrate of the pancreatic phospholipase A2 (PLA2) in the gastrointestinal (GI) tract. The reaction is further facilitated with EYPLs to the extent that they are inherently fully dispersed in gastric juices, and become even more so after hydrolysis.

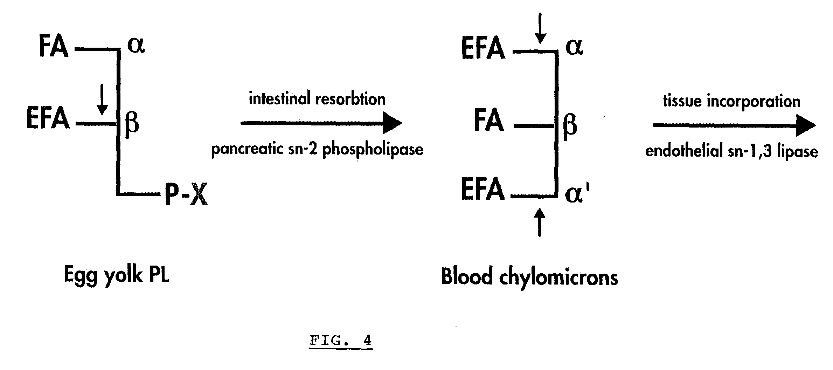

Upon absorption into the bloodstream, EYPLs transfer their LCPs to triglycerides that are packed into large lipoproteins (chylomicrons) from where they become available for tissue incorporation through the releasing action of 1,3-lipase lining the endothelium of lymphatic and blood vessels (Fig. 4).

Egg yolk phospholipids are similar in structure to endogenously produced digestive phospholipids. Long chain polyunsaturated fatty acids are almost exclusively associated with the β position of animal tissue phospholipids. The arrow indicates the site of hydrolysis of dietary phospholipids in the human gut. Long chain polyunsaturated fatty acids are absorbed as free fatty acids and re-esterified at position α,α' of blood triglycerides before they become available for tissue incorporation through the action of endothelial lipase (arrows).

This specific mechanism of absorption/transfer of LCPs from the GI micelles to blood chylomicrons also prevent them to accumulate in fat depots with the potential risk of becoming oxidised and eventually deleterious to health. The ammonium group of PC is also an oxygen radical-scavenger that works synergistically with liposoluble vitamins to protect dietary fats against peroxidation. This mechanism is active in food lipoproteins and emulsions and is probably also of relevance in the protection of cell membranes in living tissues.

### Egg yolk phospholipids as age-specific source of Vitamin F

Egg yolk phospholipids bring an interesting response to the changing requirements of humans as they age. Indeed, the laying hen transfers to the PL fraction of the yolk a mixture of fatty acids that reflects the type of diet it is served. The amount of LCPs in egg yolk PLs is maintained at a constant of +/- 15% whilst the ω6:ω3 ratio of these animal-derived LCPs varies according to the same ratio of the vegetable EFAs present in the layer meal. In practice, it is thus feasible to adjust the PL composition in egg to changing needs for LCPs in humans (Fig. 5).

Long chain polyunsaturated fatty acids account for +/- 15% of the total fatty acid content in egg yolk phospholipids and comprised mainly arachidonic (AA, C20:4ω6) and docosahexaenoic acid (DHA, C22:6ω3). The AA:DHA ratio in egg yolk phospholipids is related to the LA:LnA ratio in the diet of the bird whilst the sum of the two remains constant. The feed of the bird can be adjusted so as to best match human needs at various stages of life.

At early stage of development, infants have specific needs for pre-formed growth factors. LCPs are one of them that also naturally occur in breast milk in an average ω6:ω3 ratio nearing 3:2 - as they occur in Baby Vitamin F™. AA is crucial to the growth of cell organs and tissues whilst DHA is particularly important to the proper development of the brain and the retina. AA, γ-LA and DHLA are mostly involved in tissue responses to external stimuli.

Reaching full development at adult age, the requirements for tissue and organ homeostasis rather than growth take the lead. A 1:1 ratio has been recommended for it seems to be similar to the ω6:ω3 ratio human has evolved on for more than 4 million years. In principle, the human body at maturity can respond to organ and tissue demands for LCPs, providing the EFAs, (LA and LnA) are present in the diet in a less than 5:1 ratio.

In addition, it is known that the modern-style diet is far from being balanced, giving a higher degree of preference to the ω6 LA. Common physiological disorders (stress, emotion, smoking habits, alcohol consumption, diabetes milletus, high blood cholesterol levels, ageing, etc) also reduce the capacity of the body to synthesise ω3 LCPs for its own need, which has made dietary supplementation recommended. The Columbus Egg® is an answer to both the present ω3-poor day-to-day diet and the increasing needs for pre-formed ω3 LCPs with age. It perfectly fits into the modern specific dietary recommendations with greater emphasis on homeostatic factors over growth promoting factors.

It is important to realise that in a living system submitted to the constant pressure of oxidation, refreshing or rejuvenating structural and functional cellular blocks is by far the most important duty of essential or conditionally-essential dietary nutrients. In cell membranes, the polar ammonium head group (choline, ethanolamine, serin) of the double leaflet of PLs may well be the first line of defence against lipid (CHL and LCPs) peroxidation. EYPLs provide a safe means to replenishing the cell wall by supplying both the essential block (LCPs) and the cement (antioxidant reducing polar head) simultaneously. In short, they participate to the refreshment of tissue cell membranes and, as such, appear to be the second solvent of Life. As phospholipids are the very single ubiquitous source of LCPs in the animal kingdom, they may also be regarded as the ideal dietary source of these conditionally-essential fatty acids. LCPs can undergo oxygen-radical peroxidation to eicosanoïd-like hydroxy fatty acids with unknown biological properties. It has been shown that there association and/or inclusion into phospholipid-based emulsions protects them against oxidation. Dietary and endogenously produced phospholipids, and more specifically phosphatidylcholine (PC), play a central role during digestion in the formation of chylomicrons in intestinal enterocytes and in the metabolism of blood lipoproteins. Higher level of dietary PC has been shown to contribute to better resorption of dietary fats and vitamins and to a higher level of serum high-density lipoproteins (HDL). These latter, in turn, chase oxidised PLs and CHL at the surface of cellular membranes in distant tissues and organs and bring them back to the liver for appropriate catabolism. At the same time, dietary phospholipids transform into an important source of free choline that replenishes the cellular pool of this essential vitamin. It has been demonstrated that PC is an excellent time-released source of serum choline in human whilst being a more pleasant and safe means for choline repletion than free choline or its salts. Dietary PC is especially important to keep a stable threshold serum level (14 µM) of choline and a constant supply of acetylcholine to the brain to avoid extensive auto-cannibalism of the nerve cell membranes. Also increased choline serum level translates into reduced homo-cysteine concentration, a factor associated with higher risk of cardiovascular diseases.

Nature seems to say that LCPs and CHL present in stoechiometric ratio in cell membranes is crucial to tissue homeostasis and health. At least in egg, an independent animal reproductive system, this lipid balance seems to be genetically encoded just as it would be crucial for the proper development of the offspring. Scientific research has clearly established the influence of dietary fats on human tissue behaviour through their effect on the animal-derived LCPs distribution in cell membranes.

LCPs and CHL can be synthesised by the human body but there seems to be critical timing in Life (pregnant women, newborn, stressful active people, ageing people, hospital patients, etc) where a balanced source of these animal-derived ingredients is beneficial. Animal-derived PLs and, more specifically, egg yolk phospholipids (EYPLs), seem to be the most appropriate food vector for these 'conditionally-essential' vitamins.

The advantages of egg yolk phospholipids as cell membrane-refreshing nutrient are described hereafter:
- Phospholipids from animal origin are the single ubiquitous source of LCP. The by-functional biological species is essential to the integrity of all cell membranes in living organism,
- EYPLs naturally contain 15% of virgin LCPs synthesised in the liver of the hen fed an exclusive vegetarian diet and transferred as lipoprotein (VLDL) into the yolk of the egg during maturation of the follicles,
- their relative concentration of ω6 and ω3 LCPs can be adjusted by simple dietary means to comply with changing human requirements at various stages of life development,
- they naturally bear LCPs at the sn-2 position of the glycerol carrier which become quantitatively (>95%) available upon digestion for tissue incorporation,
- they are homeostatic with the GI tract environment. They transform to lysophospholipids upon digestion, enhancing their emulsifying properties and their capacity to encapsulate and help resorption of other water- and lipid-soluble nutrients,
- they contain a high proportion of PC (75% - 80%) that contribute to maintaining an optimum level of serum free choline in between meals (fasting) through a slow release of the vitamin without providing offensive fishy body odour characteristic of free choline supplementation,
- they act as a technological aid in combining with essential oils from plant or sea origin to form highly dispersed emulsions resistant to fatty acid peroxidation,
- they contribute to the synthesis of smaller phospholipid-rich chylomicrons and, in turn, higher level of HDL that patrol within the body and clean cell membranes from oxidised cholesterol and phospholipids,
- EYPLs are declared Novel Foods in the European Community (EC 258/97) under the generic designation 'egg phospholipids'.

### REFERENCES

- BNF, British Nutrition Foundation (1993) - Unsaturated fatty acids. Nutritional and physiological significance. The Report of the British Nutrition Foundation's Task Force. London, Chapman & Hall.
- COMA (1995) Report on Health and Social Subjects No.46, Nutritional Aspects of Cardiovascular Diseases, ISBN 0 11 321875 3, HMSO, London.
- ESPPGAN, European Society for Pediatric Gastroenterology and Nutrition / Committee on Nutrition (1991) - Committee Report. Comment on the content and composition of lipids in infant formulas. Acta. Paediatr. Scand. 80, 887-896.
- FAO/WHO, Food and Agriculture Organisation / World Health Organisation (1994) - Expert consultation on fats and oils in human nutrition. Food and Nutrition Paper No. 57, Ch.7, 49-55.
- LSRO (1998) taken from Nutraceuticals World July/August 1999, Infant Formula Requirements Released, pp. 62-68.
- Columbus®, the natural original egg - A model for healthy animal-derived food (1998) Leatherhead Food RA Food Industry Journal, 1, 289-300.
- Lecithin and choline - A clinical monograph (1997) Central Soya Company Inc., Fort Wayne, Indiana.
- Dietary ω3 and ω6 fatty acids - Biological effects and nutritional essentiality (1989) Life Sciences, Vol. 171, Series A, Plenum Press, ISBN 0-306-43231-5.
- Fats that Heal, Fats that Kill (1997) 5^{th} ed., Alive Books, Burnaby, Canada, ISBN 0-920470-40-8.
- Availability of seed oils from finnish berries (1999) University of Turku, Finland, Tema-Team 6555-99, ISBN 952-91-1003-0

## Claims

1. Manufactured lipid emulsion having a formula suitable for feeding infants, comprising pre-emulsified egg yolk phospholipid micelles with about 10 to about 20% by weight of phospholipid (including choline), about 1,5 to about 2,5% by weight cholesterol, about 35 to 45% by weight of essential fatty acids and about 35 to about 45% by weight of non-essential fatty acids, the total of the micelles being 100% by weight.

2. The lipid emulsion according to the claim 1, **characterised in that** about 10 to about 20% by weight of the phospholipids derived from choline.

3. The lipid emulsion according to the claim 1 or 2, **characterised in that** the phospholipid micelles comprise about 14,5% by weight of phospholipid, including about 1,45% by weight of choline, about 1,8% by weight of cholesterol, about 41,5% by weight of essential fatty acids and about 39,2% by weight of non-essential fatty acids.

4. The lipid emulsion according to any of the preceding claims, **characterised in that** the diameter of the micelles is lower than 0,22 µm.

5. The lipid emulsion according to any of the preceding claims, **characterised in that** the essential fatty acids are long chain polyunsaturated acids (LCPs) from naturally-occurring sources, preferably made of arichidonic acid (AA) obtained from egg yolk phospholipids, docosahexaenoic and/or docosapentaenoic (DHA/DPA) acids and eicosapentaenoic acid (EPA) obtained from fish oil and gamma-linolenic and/or dihomo γ-linoleric acids (γ-LA/ΔHLA) obtained from borage oil.

6. The lipid emulsion according to any of the preceding claims, **characterised in that** the phospholipid micelles are made available in diluted liquid (i.e., disposable vials) and powder (i.e., spray-dried on maltodextrin based carriers) forms.

7. The food composition, **characterised in that** the phospholipid micelles of the lipid emulsion of any of the preceding claims are mixed with a source of non essential fat, such as butter oil or interestorified vegetable oils, and are spray-dried over a suitable food carrier.

8. The food composition according to the claim 7, **characterised in that** the carrier is selected from the group consisting of electrodialysed whey and non-fat milk or a mixture thereof.

9. Use of the manufactured lipid emulsion or food composition according to any of the preceding claims for human consumption.

10. The use according to the claim 9, for supplementing infants.
